# EUROPÄISCHE PATENTSCHRIFT

(11) **EP 2 355 991 B1**
(45) Veröffentlichungstag und Bekanntmachung des Hinweises auf die Patenterteilung: **26.09.2018**
(21) Anmeldenummer: 09737428.4
(22) Anmeldetag: 21.10.2009
(51) Int. Cl.: B60G 17/0185, B60G 17/04, B60G 17/052, G01M 17/04

(54) **VERFAHREN ZUR FUNKTIONSÜBERPRÜFUNG EINES VENTILS EINER FAHRZEUGLUFTFEDERUNG**
METHOD FOR TESTING A VALVE IN AN AIR SUSPENSION OF A VEHICLE
PROCÉDÉ PERMETTANT DE VÉRIFIER UNE SOUPAPE DE SUSPENSION PNEUMATIQUE POUR UN VÉHICULE.

(30) Priorität: 11.11.2008 DE 102008037548
(43) Veröffentlichungstag der Anmeldung: 17.08.2011
(73) Patentinhaber: Continental Teves AG & Co. OHG, 60488 Frankfurt am Main (DE)
(72) Erfinder: STILLER, Alexander, 30823 Garbsen (DE); SCHAUMBURG, Harald, 31157 Sarstedt (DE); TREDER, Christian, 31535 Neustadt (DE)
(86) Internationale Anmeldenummer: PCT/EP2009/063779
(87) Internationale Veröffentlichungsnummer: WO 2010/054917

(56) Entgegenhaltungen:
- EP-A1- 2 112 009
- DE-A1- 4 001 187
- DE-A1- 10 126 458
- DE-A1- 10 164 108
- GB-A- 2 344 323

## Beschreibung

Die Erfindung betrifft ein Verfahren zur Überprüfung der Funktionsfähigkeit eines Ventils einer Luftfeder für eine Fahrzeugluftfederung, wobei die Luftfeder mindestens zwei Luftvolumina aufweist, die mit dem zu überprüfenden Ventil miteinander verbindbar sind, wobei eines der Luftvolumina durch Änderung des Luftdruckes und des Luftinhaltes veränderbar ist zur proportionalen Höhenänderung des Fahrzeugs zu einem Bezugssystem, wobei die Änderung der Höhenlage des Fahrzeugs über Sensoren messbar und über eine Recheneinrichtung auswertbar ist. Ein Verfahren gemäß dem Oberbegriff des Anspruchs 1 ist aus der DE 101 26 458 A1 bekannt.

Prüfungs- oder Kalibrierungsverfahren von einzelnen Einrichtungen einer Fahrzeugluftfederung sind grundsätzlich bekannt, wenn auch weniger auf die Überprüfung von Ventilen gerichtet. Die DE 101 64 108 A1 offenbart ein Verfahren zur Funktionsprüfung eines in einer Fahrdynamikregelung eingebundenen Querbeschleunigungssensors ohne Probefahrt / Kurvenfahrt, bei dem ein Fahrzeug auf einer Rampe oder mit Hilfe entsprechender Hebevorrichtungen geneigt wird und dann eine rechnerisch durch die geometrischen Verhältnisse ermittelte statische "Querkomponente" der Erdbeschleunigung mit dem vom Sensor angezeigten Signal über eine Diagnosesoftware verglichen wird. Eine Überprüfung von tatsächlich vorhandenen dynamischen Bewegungen des Fahrzeugaufbaus kann hier nicht durchgeführt werden.
Für die Erfindung bestand die Aufgabe, ein einfaches Verfahren zur Prüfung von Ventilen bereitzustellen, welches auf tatsächliche Fahrzeugbewegungen reagiert und daraus sichere Rückschlüsse auf die Funktionsfähigkeit eines Ventils erlaubt.

Gelöst wird diese Aufgabe durch die Merkmale des Hauptanspruchs. Weitere vorteilhafte Ausbildungen sind in den Unteransprüchen offenbart.

Dabei werden zunächst unter anderem die beiden Luftvolumina durch Schließen des zu überprüfenden Ventils voneinander getrennt. Danach wird dem proportional zur Höhenänderung des Fahrzeugs veränderbaren Luftvolumen eine Luftmenge zugeführt wird, die die Höhenlage des Fahrzeugs verändert. Sodann wird eine erste Höhenlage des Fahrzeugs von einem Sensor gemessen. Danach wird das zu überprüfende Ventil geöffnet und anschließend eine zweite Höhenlage des Fahrzeugs von dem Sensor gemessen. Anhand der Reaktion Fahrzeugaufbaus und der sich einstellenden Höhenlage des Fahrzeugs lässt sich dann zweifelsfrei auf die Funktionsfähigkeit des Ventils schließen.
Die Funktionsweise des Verfahrens lässt sich am besten an einem Ausführungsbeispiel erklären. Es zeigen
- Fig. 1: eine prinzipielle Darstellung einer Luftfeder für eine Fahrzeugluftfederung
- Fig. 2: ein Diagramm, in dem die Höhenlage bzw. Höhenänderung h des Fahrzeugs über der Zeit t bei Durchführung des Verfahrens aufgetragen ist

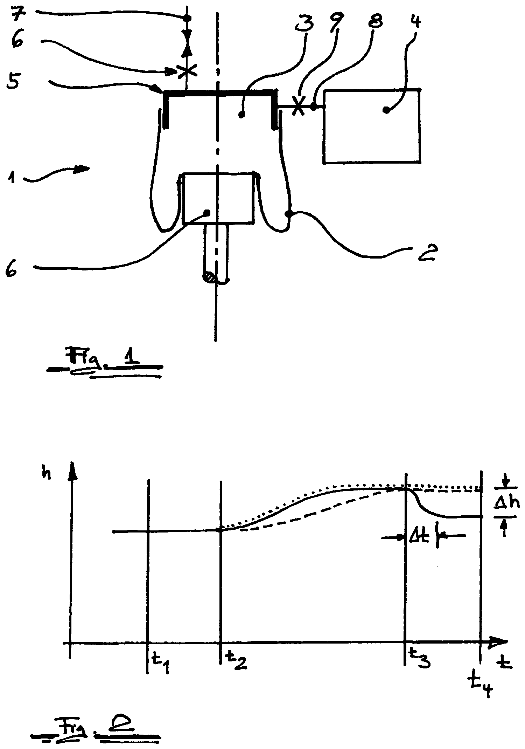

Die Fig. 1 zeigt in prinzipieller Darstellung die Luftfeder 1 für eine Fahrzeugluftfederung, welche zwei Volumina aufweist, nämlich ein durch einen Rollbalg 2 begrenztes Feder- oder Arbeitsvolumen 3 und ein Zusatz- oder Ausgleichsvolumen 4. Der Rollbalg 2 ist dabei mit seinen Enden einerseits am Luftfederdeckel 5 und andererseits am Luftfederkolben 6 befestigt und rollt beim Ein- und Ausfedern auf letzterem ab.
Am Luftfederdeckel 5 befindet sich die mit einem Ventil 6 versehene Luftzufuhrleitung 7. Das Arbeitsvolumen 3 ist mit dem Zusatzvolumen 4 über eine Verbindungsleitung 8 verbunden, in der sich das zu überprüfende Ventil 9 befindet.

Die Fig. 2 zeigt nun anhand eine Diagramms, in dem die Höhenlage bzw. Höhenänderung h des Fahrzeugs über der Zeit t aufgetragen ist, rein qualitativ den Verlauf der Änderung der Höhenlage des Fahrzeugs bei Durchführung des Verfahrens.

Zunächst werden zu einem Zeitpunkt t₁ die beiden Luftvolumina durch Schließen des zu überprüfenden Ventils 9 voneinander getrennt. Danach wird zu einem Zeitpunkt t₂ dem proportional zur Höhenänderung des Fahrzeugs veränderbaren Arbeitsvolumen 3 eine Luftmenge zugeführt wird, die die Höhenlage des Fahrzeugs um den Betrag Δh verändert. verändert. Sodann wird zu einem Zeitpunkt t₃ die Höhenlage des Fahrzeugs von einem Sensor gemessen.

Danach wird das zu überprüfende Ventil 9 geöffnet und anschließend zu einem Zeitpunkt t₄ wiederum die Höhenlage des Fahrzeugs von dem Sensor gemessen.

Anhand der Reaktion Fahrzeugaufbaus und der sich einstellenden Höhenlage des Fahrzeugs lässt sich dann zweifelsfrei auf die Funktionsfähigkeit des Ventils schließen. Sackt innerhalb des Intervalls Δt der Fahrzeugaufbau um den Betrag Δh ab, verändert sich also die Höhenlage des Fahrzeugs durch die Zuschaltung des Zusatzvolumens 4 zum Arbeitsvolumen 3 um diesen Betrag, so ist von einer sicheren Funktionsfähigkeit, d.h. von einem sicheren Schalten (Schließen und Öffnen) des Ventils 9 auszugehen. Dies wird durch die durchgezogene Linie im Diagramm dargestellt.

Verändert sich die Höhenlage des Fahrzeugs durch die Zuschaltung des Zusatzvolumens 4 zum Arbeitsvolumen 3 jedoch nicht, so ist davon auszugehen, das ein sicheres Schalten des Ventils 9 nicht gegeben ist. Dies wird im Zeitintervall zwischen t₃ und t₄ durch die parallel laufenden punktierten bzw. gestrichelten Linien im Diagramm dargestellt.

Dabei zeigt die punktierte Linie den Fall, das zwar ein Schließen des Ventils zum Zeitpunkt t₂, jedoch keine eine Öffnung des Ventils zum Zeitpunkt t₄ erfolgte.

Die gestrichelte Linie verdeutlicht einen weiteren Schritt des Verfahrens, bei dem während der Zufuhr der Luftmenge zum Arbeitsvolumen 3 der Gradient der Höhenänderung des Fahrzeugs, d.h. die Höhenänderung Δh des Fahrzeugs pro Zeiteinheit im Zeitraum zwischen den Zeitpunkten t₂ und t₃ gemessen und mit einem Schwellenwert verglichen wird.
Mit dieser zusätzlichen Prüfung der Abweichung der gestrichelten Linie von der punktierten oder durchgezogenen Linie lässt sich nämlich feststellen, ob das Ventil 9 zum Zeitpunkt t₃ nicht nur nicht öffnet, sondern ob es bereits zum Zeitpunkt t₂ nicht schließt.
Besonders geeignet zur Durchführung des Verfahrens ist eine Steuerungseinrichtung für eine Fahrzeugluftfederung, welche eine entsprechende Programmsteuerung aufweist. Damit kann entweder der Fahrer oder ein Servicetechniker an jedem Ort die Funktionsweise des Ventils überprüfen.
Ebenfalls vorteilhaft zur Durchführung des Verfahrens ist ein Diagnosegerät zum Anschluss an eine Fahrzeugluftfederung, welches eine entsprechende Programmsteuerung aufweist. Damit kann eine solche Überprüfung leicht in einer Servicewerkstatt durchgeführt werden.
Besonders vorteilhaft wird ein solches Verfahren nutzbar innerhalb einer Fahrzeugluftfederung, beispielsweise für PKW.

### Bezugszeichenliste

### (Teil der Beschreibung)

- 1): Luftfeder
- 2): Rollbalg
- 3): Arbeitsvolumen
- 4): Zusatzvolumen
- 5): Luftfederdeckel
- 6): Ventil
- 7): Luftzufuhrleitung
- 8): Verbindungsleitung
- 9): Ventil

## Patentansprüche

1. Verfahren zur Überprüfung der Funktionsfähigkeit eines Ventils einer Luftfeder (1) für eine Fahrzeugluftfederung,
- wobei die Luftfeder mindestens zwei Luftvolumina (3, 4) aufweist, die mit dem zu überprüfenden Ventil (9) miteinander verbindbar sind,
- wobei eines der Luftvolumina (3) durch Änderung des Luftdruckes und des Luftinhaltes veränderbar ist zur proportionalen Höhenänderung des Fahrzeugs in einem Bezugssystem,
- wobei die Änderung der Höhenlage des Fahrzeugs über Sensoren messbar und über eine Recheneinrichtung auswertbar ist
- zunächst die beiden Luftvolumina (3, 4) durch Schließen des zu überprüfenden Ventils (9) voneinander getrennt werden,
- dass danach dem proportional zur Höhenänderung des Fahrzeugs veränderbaren Luftvolumen (3) eine Luftmenge zugeführt wird, die die Höhenlage des Fahrzeugs verändert,
- dass nach der Zufuhr der Luftmenge eine erste Höhenlage des Fahrzeugs von einem Sensor gemessen wird
- dass danach das zu überprüfende Ventil (9) geöffnet und anschließend eine zweite Höhenlage des Fahrzeugs von dem Sensor gemessen wird, **dadurch gekennzeichnet, dass** während der Zufuhr der Luftmenge zum proportional zur Höhenänderung des Fahrzeugs veränderbaren Luftvolumen (3) der Gradient der Höhenänderung des Fahrzeugs gemessen und mit einem Schwellenwert verglichen wird.

2. Steuerungseinrichtung für eine Fahrzeugluftfederung, welche eine Programmsteuerung zur Durchführung des Verfahrens nach Anspruch 1 oder 2 aufweist.

3. Diagnosegerät zum Anschluss an eine Fahrzeugluftfederung, welches eine Programmsteuerung zur Durchführung des Verfahrens nach Anspruch 1 oder 2 aufweist.

4. Fahrzeugluftfederung mit einer Steuerungseinrichtung nach Anspruch 3.

## Claims

1. Method for testing the functional capability of a valve of an air spring (1) for a vehicle air suspension system,
- wherein the air spring has at least two air volumes (3, 4) which can be connected to one another using the valve (9) to be tested,
- wherein one of the air volumes (3) can be changed by changing the air pressure and the air content, in order to proportionally change the ride level of the vehicle in a reference system,
- wherein the changing of the ride level of the vehicle can be measured by means of sensors and can be evaluated by means of a computing device,
- firstly the two air volumes (3, 4) are disconnected from one another by closing the valve (9) to be tested,
- in that after this a quantity of air is fed to the air volume (3) which can be changed in proportion to the changing of the ride level of the vehicle, which quantity of air changes the ride level of the vehicle,
- in that after the supplying of the quantity of air a first ride level of the vehicle is measured by a sensor,
- in that after this the valve (9) to be tested is opened and subsequently a second ride level of the vehicle is measured by the sensor, **characterized in that** during the supplying of the quantity of air to the air volume (3) which can be changed in proportion to the changing of the ride level of the vehicle, the gradient of the changing of the ride level of the vehicle is measured and compared with a threshold value.

2. Control device for a vehicle air suspension system which has a program controller for carrying out the method according to Claim 1 or 2.

3. Diagnostic device for connection to a vehicle air suspension system, which has a program controller for carrying out the method according to Claim 1 or 2.

4. Vehicle air suspension system having a control device according to Claim 3.

## Revendications

1. Procédé pour vérifier la fonctionnalité d'une soupape d'un ressort pneumatique (1) pour une suspension pneumatique d'un véhicule,
- le ressort pneumatique présentant au moins deux volumes d'air (3, 4) qui peuvent être connectés l'un à l'autre par la soupape (9) à contrôler,
- l'un des volumes d'air (3) pouvant être modifié par modification de la pression d'air et du contenu d'air pour faire varier de manière proportionnelle la hauteur du véhicule dans un système de référence,
- la modification de la position en hauteur du véhicule pouvant être mesurée par des capteurs et pouvant être analysée par un dispositif de calcul,
- les deux volumes d'air (3, 4) étant d'abord séparés l'un de l'autre par fermeture de la soupape (9) à contrôler,
- en ce qu'une quantité d'air est ensuite acheminée au volume d'air (3) pouvant être modifié de manière proportionnelle à la variation de hauteur du véhicule, laquelle quantité d'air modifie la position en hauteur du véhicule,
- en ce qu'une première position en hauteur du véhicule est mesurée par un capteur après l'alimentation en la quantité d'air,
- en ce que la soupape (9) à contrôler est ensuite ouverte puis une deuxième position en hauteur du véhicule est mesurée par le capteur,
**caractérisé en ce que** pendant l'alimentation en la quantité d'air du volume d'air (3) pouvant être modifié de manière proportionnelle à la variation de hauteur du véhicule, le gradient de la variation de hauteur du véhicule est mesuré et est comparé avec une valeur seuil.

2. Dispositif de commande pour une suspension pneumatique de véhicule, qui présente une commande de programme pour mettre en oeuvre le procédé selon la revendication 1 ou 2.

3. Appareil de diagnostique destiné à être raccordé à une suspension pneumatique de véhicule, qui présente une commande de programme pour mettre en oeuvre le procédé selon la revendication 1 ou 2.

4. Suspension pneumatique de véhicule comprenant un dispositif de commande selon la revendication 3.
